(19)

Europäisches
Patentamt
European
Patent Office
Office européen
des brevets

(11) **EP 3 926 363 B1**

(12) **EUROPEAN PATENT SPECIFICATION**

(45) Date of publication and mention
of the grant of the patent:
**12.03.2025 Bulletin 2025/11**

(51) International Patent Classification (IPC):
**G01S 13/00** (2006.01)   **G01S 13/87** (2006.01)
**G01S 13/88** (2006.01)   **G08B 21/10** (2006.01)

(21) Application number: **20179979.8**

(22) Date of filing: **15.06.2020**

(52) Cooperative Patent Classification (CPC):
**G01S 13/88; G01S 13/003; G01S 13/878;
G08B 21/10**

(54) **PASSIVE RADAR AVALANCHE WARNING METHOD AND SYSTEM**

VERFAHREN UND SYSTEM ZUR PASSIVEN RADARLAWINENWARNUNG

PROCÉDÉ ET SYSTÈME D'AVERTISSEMENT D'AVALANCHE RADAR PASSIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.12.2021 Bulletin 2021/51**

(73) Proprietor: **Fraunhofer-Gesellschaft zur
Förderung
der angewandten Forschung e.V.
80686 München (DE)**

(72) Inventors:
 • **O'HAGAN, Daniel
   53343 Wachtberg (DE)**
 • **CRISTALLINI, Diego
   53343 Wachtberg (DE)**
 • **SEIDEL, Viktor
   53343 Wachtberg (DE)**
 • **CESBRON LAVAU, Louis
   53343 Wachtberg (DE)**

(74) Representative: **2SPL Patentanwälte PartG mbB
Landaubogen 3
81373 München (DE)**

(56) References cited:
**CN-A- 104 569 968**

• **LORENZ MEIER ET AL**: "Real-Time Avalanche
Detection with Long-Range, Wide-Angle Radars
for Road Safety in Zermatt, Switzerland Hazard
monitoring View project Large-scale Glacier
Detachments View project REAL-TIME
AVALANCHE DETECTION WITH LONG-RANGE,
WIDE-ANGLE RADARS FOR ROAD SAFETY IN
ZERMATT, SWITZERLAND", 31 December 2016
(2016-12-31), XP055746063, Retrieved from the
Internet <URL:https://www.researchgate.net/
profile/Lorenz_Meier4/publication/
328789085_Real-Time_Avalanche_Detection_
with_Long-Range_Wide-Angle_Radars_for_
Road_Safety_in_Zermatt_Switzerland/links/
5be2fbbe92851c6b27ad993e/
Real-Time-Avalanche-Detection-with-Long-Ran
ge-Wide-Angle-Radars-for-Road-Safety-in-Zer
matt-Sw> [retrieved on 20201102]
• **CRISTALLINI D ET AL**: "Space-based passive
radar enabled by the new generation of
geostationary broadcast satellites",
AEROSPACE CONFERENCE, 2010 IEEE, IEEE,
PISCATAWAY, NJ, USA, 6 March 2010
(2010-03-06), pages 1 - 11, XP031657060, ISBN:
978-1-4244-3887-7
• **PASTINA DEBORA ET AL**: "Maritime Moving
Target Long Time Integration for GNSS-Based
Passive Bistatic Radar", IEEE TRANSACTIONS
ON AEROSPACE AND ELECTRONIC SYSTEMS,
IEEE SERVICE CENTER, PISCATAWAY, NJ, US,
vol. 54, no. 6, 1 December 2018 (2018-12-01),
pages 3060 - 3083, XP011704099, ISSN:
0018-9251, [retrieved on 20181205], DOI: 10.1109/
TAES.2018.2840298

## Description

### Field

The present disclosure relates generally to avalanche warning concepts and, mor particularly, to passive radar-based avalanche warning concepts.

### Background

Avalanche monitoring is of critical importance for safety of people and infrastructure. Nowadays several technologies are used to detect the onset of avalanches. Radar is chief among contender technologies as it provides persistent remote monitoring in all weather conditions. Avalanche monitoring comprises several different specific tasks such as: 24/7 monitoring of critical infrastructures, such as roads running nearby exposed mountain slopes, prediction of imminent avalanches, and confirmation of occurred avalanches after triggering blasting. Regarding the blasting scenario, there exist several cases and locations in which avalanches are likely to form after significant accumulation of new snow or after rapid increase of air temperature. In such cases, operators can trigger the avalanche via controlled blasting to reduce risk to people and infrastructure. It is then necessary to have a confirmation that the blasting actually generated an avalanche. To achieve this, a dedicated and punctual observation of a specific area is required, and it has to be performed independent of weather and visibility conditions.

Currently this task is performed using different technologies, among which mechanical systems located at specific points of a hillside, namely wires torn by a falling avalanche. These mechanical trip-wires have the major disadvantage that after every incident, new wires need to be strung again and this operation can endanger technicians. Another solution is to use copters to monitor the predefined area whilst blasting an avalanche, but this solution can only be used under good weather conditions. An alternative solution to solve the aforementioned drawbacks is the use of active radars, as they (i) are unaffected by low visibility; (ii) can offer reliable monitoring of small areas from a safe distance; and (iii) do fulfill all the requirements of a warning system. Commercial active radar solutions dealing with this specific task are already available, namely A. Kogelnig, S.Wyssen, E. Marchetti, and G. Ulivieri, "Avalanche detection systems for operational use: Summary of three years experiences," in Proceedings, International Snow Science Workshop, Banff, 2014, R. Koschuch, "Avalanche radar introduction," 2015, and L. Meier, M. Jacquemart, B. Blattmann, and B. Arnold, "Real-time avalanche detection with long-range, wide-angle radars for road safety in Zermatt, Switzerland," in Proceedings, International Snow Science Workshop, Breckenridge, Colorado, 2016. They are all using Doppler radar FMCW, ground based, and operating at X-band (the frequency band from 8.0-12.0 GHz offers both a good snow reflectivity and low propagation losses due to rain/fog/clouds). In Kogelnig et al., the active radar is installed on the opposite side of the valley facing the avalanche path to be monitored. As the beam width of the antenna only allows a width of 170m at 2km range, it is important to choose the most important spot of the avalanche track. This spot can be targeted in advance if this system is used in collaboration with avalanche towers that trigger avalanches. The radar is used then as confirmation that an avalanche has been triggered. A similar design is proposed by Koschuch: a coherent pulse Doppler radar, targeting only a specific area where avalanches often happen or where avalanches can endanger infrastructure or people. In Meier et al., the active avalanche radar is also connected to a road closure system, and it is currently deployed on the road to Zermatt, Switzerland. This radar performs a live monitoring of the mountain slope: if an avalanche is detected with the radar, traffic lights on the roads tum red automatically and the road closes with barriers. A second radar is used to see if the avalanche reaches a lower altitude in order to reopen the road immediately if the avalanche did not reach the road. The system is also integrated with webcams to check if the road is free from debris. The active avalanche radar of Meier et al is based on US 4300121 A referring to an active Doppler radar using a transmitter and a receiver, as well as a plurality of radars. The hillside is divided in range sectors, which it allows the radar to know exactly where the avalanche occurred.

CN 104 569 968 A describes a passive radar method in which Synthetic Aperture Radar (SAR) images are generated using GPS signals.

Thus, there is a need to provide an alternative to the use of radars to confirm the occurrence of an avalanche.

### Summary

This need is addressed by methods and apparatuses in accordance with the independent claims. Potentially advantageous embodiments are addressed by the dependent claims.

According to a first aspect of the present disclosure it is provided a passive radar avalanche warning method. The method includes illuminating an area of a potential avalanche with at least one third-party transmitter, obtaining a first signal corresponding to a direct arrival from the third-party transmitter and a second signal corresponding to a reflection from the area of the potential avalanche, determining a Doppler shift between the first and the second signal, and indicating an avalanche if the Doppler shift exceeds a predetermined threshold. The skilled person having benefit from the present disclosure will appreciate that the expression avalanche also includes phenomena like rockslides. The area of a potential avalanche can include critical infrastructures, such as mountain slopes, for example.

The present disclosure proposes to use a passive radar system for avalanche detection and warning. Passive radar systems refer to radar systems that detect and track objects by processing reflections from non-cooperative sources of illumination in the environment, such as commercial broadcast and communications signals. More particularly, the present disclosure proposes to use a passive bistatic radar system comprising at least one third-party transmitter and a receiver that are separated.

Generally, the third-party transmitter could be configured to transmit or broadcast any kind of RF signals, including analog or digital video/television signals, analog or digital audio signals, radio signals of cellular communication systems, etc. In some example implementations, the third-party transmitter comprises a satellite-based transmitter. According to the invention, the satellite-based transmitter comprises a geostationary satellite configured to broadcast a digital television signal, such as Digital Video Broadcasting (DVB), DVB-S, DVB-S2 and/or DVB-SH, for example. These satellites have a global coverage of the earth, especially DVB-S2.

In some example implementations, determining the Doppler shift comprises determining a range-Doppler map based on comparing the first and the second signal. A range-Doppler map may comprise a plurality of range bins and a plurality of Doppler bins associated with each range bin, for example. Visualizing a signal in the range-Doppler domain can help to understand connections among targets. From a range-Doppler map, one can see how far away the targets are and how quickly they are approaching or receding, distinguish among targets moving at various speeds at various ranges. If a target platform is stationary, a range-Doppler map shows a response from stationary targets at zero Doppler. For targets that are moving relative to the receiver, the range-Doppler map shows a response at nonzero Doppler values. Range information can be obtained by determining a phase difference between the first and the second signal, for example. Doppler shifts can be determined via a Fourier transform (fast Fourier transform, FFT) of the first and/or the second signal, for example.

In some example implementations, comparing the first and the second signal comprises cross-correlating the first and the second signal as a measure of similarity of the two signals as a function of the displacement of one relative to the other.

Geostationary satellites broadcasting digital television signals (DVB-S, DVB-S2 and/or DVB-SH) may suffer relatively low power density at earth's surface. To cope with weak signal power, some example implementations propose using a first directive (directional) antenna pointing towards the third-party transmitter for receiving the first signal and a second directive antenna pointing towards the area of the potential avalanche for receiving the second signal.

In some example implementations, a directive antenna pointing towards the area of the potential avalanche is used for receiving the second signal and wherein the first signal is obtained from the second signal by demodulating and re-modulating a digital signal contained in the second signal. This may be done if digital signals are broadcast. Here, it is also possible to operate the proposed passive radar with a single channel, requiring only a single antenna to be pointed towards the target. In this case, the clean replica of the transmitted signal for the cross-correlation in can be retrieved by demodulating and re-modulating the digital signal.

In some example implementations, the method may further include purposely triggering the avalanche, and confirming the avalanche if the measured Doppler shift exceeds the predetermined threshold. In this way it can be confirmed that the avalanche has been triggered as desired.

According to a further aspect of the present disclosure it is also provided a computer program having a program code for performing the method of any one of the previous implementations when the computer program is executed on a programmable hardware device.

According to a further aspect of the present disclosure it is also provided a passive radar avalanche warning system. The proposed passive radar avalanche warning system comprises at least one third-party transmitter for illuminating an area of a potential avalanche, at least one receiver configured to obtain a first signal corresponding to a direct arrival from the third-party transmitter and a second signal corresponding to a reflection from the area of the potential avalanche, and a processor configured to determine a Doppler shift between the first and the second signal and to indicate an avalanche if the Doppler shift exceeds a predetermined threshold.

The present disclosure relates to an avalanche warning system based on passive bi-/multi-static radar preferably utilizing satellite-borne illuminations of opportunity. Avalanches occur frequently throughout the world. On the surface of most commercial ski-slopes, and industrial open-cast mines, there are known "break-points" that are monitored to observe earth-subsidence. Once subsidence is detected, the deployed sensor may trigger an avalanche warning. Existing contender technologies are mostly active radars that are dependent on EM spectrum allocation and are expensive. The system proposed here is an entirely passive "green technology". It does not require a license to use the EM spectrum and it can function in all weather conditions, irrespective of time-of-day or season. Illumination may be provided by GEO satellites and, unlike contender technologies, the illuminating signal may be globally available.

## Brief description of the Figures

Some examples of apparatuses and/or methods will be described in the following by way of example only, and with reference to the accompanying figures, in which

Fig. 1      illustrates an embodiment of a proposed passive radar avalanche warning system;

Fig. 2      illustrates an embodiment of a proposed passive radar avalanche warning method; and

Fig. 3A, B    shows Range/Doppler maps before and during a landslide.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

An objective of this disclosure is to bring an alternative to the use of active radars to confirm the occurrence of an avalanche by exploiting a passive radar system. Instead of using a proper dedicated waveform, the proposed system utilizes robust and stable pre-existing signals, called illuminators of opportunity (IOs). An idea of this disclosure is to use satellite-based illuminators to get illumination at any time and at any place.

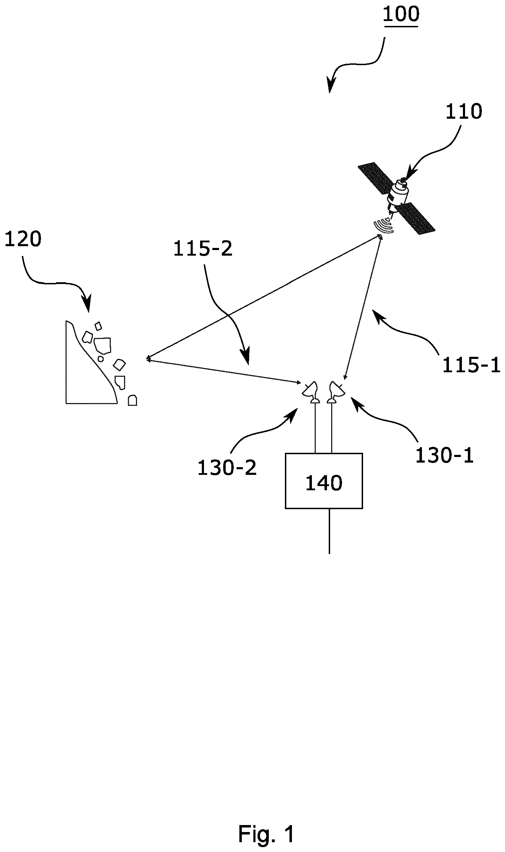

Fig. 1 illustrates an embodiment of the proposed passive radar avalanche warning system 100.

The example passive radar avalanche warning system 100 comprises at least one third-party transmitter 110 for illuminating an area 120 of a potential avalanche, a first receive antenna 130-1 configured to receive a first signal 115-1 corresponding to a direct arrival from the third-party transmitter 110 and a second receive antenna 130-2 configured to receive a second signal 115-2 corresponding to a reflection from the area 120 of the potential avalanche. The passive radar avalanche warning system 100 further comprises a processor 140 configured to determine a Doppler shift between the first and the second signals 115-1, 115-2 and to indicate an avalanche if the Doppler shift exceeds a predetermined threshold.

The skilled person having benefit from the present disclosure will appreciate that also one or more further receive antennas/channels configured to receive signals corresponding to reflections from one or more further areas of potential avalanches can be used. In this way, a spatial observation area may be increased. Each receive channel may comprise respective RF front-end circuitry to receive, amplify, down-convert, and convert the signals from analog to digital domain. Resulting digital baseband signals may then be fed into digital processing circuitry 140.

In principle, various third-party transmitters or illuminators 110 can be used for the proposed passive bi- or multi-static radar avalanche warning system 100 100: e.g.,

- according to the invention, geostationary satellites broadcasting digital television signals (DVB-S, DVB-S2 and/or DVB-SH). These satellites have a global coverage of the earth (especially DVB-S2), but they may suffer low power density at earth's surface. To cope with weak signal power, the use of directive antennas 130-1, 130-2 on receive side may help to guarantee adequate link budget, and hence reliable detection performance. Given that geostationary satellites are located on the equatorial orbit, illuminating issues might apply in highly mountainous regions. Outside the claimed subjectmatter,

- global navigation satellite system (GNSS) constellations (GPS, GLONASS, GALILEO) satellites. These may also offer global coverage and additionally, given their lower orbits (MEO) and being a constellation of several satellites, they may overcome the illuminating issues in mountainous regions. Issues related to satellite movement can be solved, see D. Pastina et al.: "Maritime Moving Target Long Time Integration for GNSS-Based Passive Bistatic Radar," in IEEE Transactions on Aerospace and Electronic Systems, vol. 54, no. 6, pp. 3060-3083, Dec. 2018;

- Iridium satellite constellation providing L band (range of frequencies in the radio spectrum from 1 to 2 GHz) voice and data information coverage to satellite phones, pagers and integrated transceivers over the entire earth surface;

- Starlink, a satellite constellation to provide satellite Internet access. The constellation will consist of thousands of mass-produced small satellites in low Earth orbit (LEO);

- etc.

An overview of further potential satellite IOs can be found in D. Cristallini et al., "Spacebased passive radar enabled by the new generation of geostationary broadcast satellites," 2010 IEEE Aerospace Conference, Big Sky, MT, 2010, pp. 1-11.

As illustrated in Fig. 1, the passive radar avalanche warning system 100 may use two receive channels, each one connected to a separate antenna 130-1, 130-2. The antenna 130-1 connected to the reference channel may be directed towards the satellite 110 to establish a clear signal. In the case of GNSS illumination, an omnidirectional antenna may be considered. The second antenna 130-2 may be directed to a specific area of interest 120 of the mountain slope.

A principle of the proposed passive radar avalanche warning system is to cross-correlate the direct and reflected signals 115-1, 115-2 received from the two channels: the direct signal 115-1 from the transmitter 110 and the signal 115-2 reflected by the target 120. After reception, down-conversion and digitization, the two signals 115-1, 115-2 may be crosscorrelated, thus generating a range-Doppler map. In some implementations, the exploited signals may be time continuous. Therefore, a segmentation of the signal stream may be needed. Each segment may be referred to as coherent processing interval (CPI), and it may result in one corresponding single range-Doppler map.

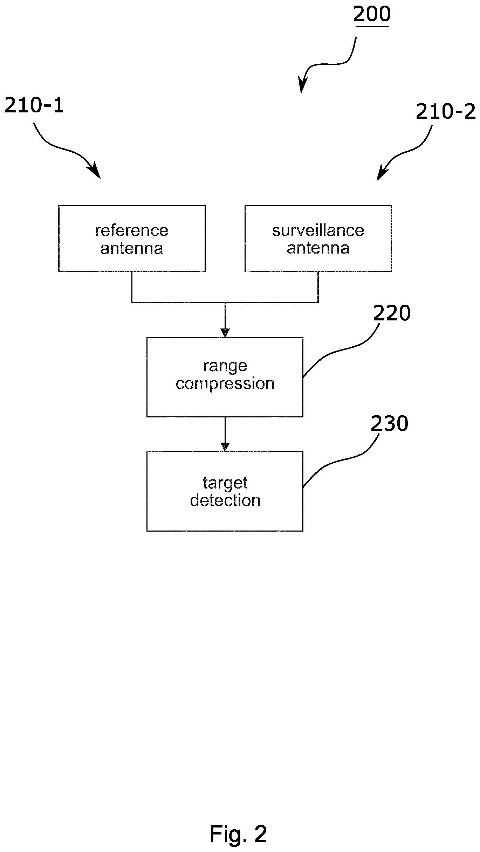

Example processing steps are illustrated in Fig. 2.

The example passive radar avalanche warning method 200 includes illuminating a geographic area 120 of a potential avalanche with at least one third-party transmitter 110. Method 200 further includes receiving 210-1 a first signal 115-1 corresponding to a direct (line-of-sight) arrival from the third-party transmitter 110 and receiving 210-2 a second signal 115-2 corresponding to a reflection from the area 120 of the potential avalanche. Down-conversion of signals 115-1, 115-2 may be performed coherently, e.g., with a single local oscillator controlling respective mixers. Method 200 further includes cross-correlating 220 the first and the second signals 115-1, 115-2. Target detection 230 can be done based on the cross-correlation 220. Target detection 230 may include determining a Doppler shift between the first and the second signal 115-1, 115-2 and indicating an avalanche if the Doppler shift exceeds a predetermined threshold.

A signal after cross-correlation 220 is normally referred to as range compressed since the cross-correlation concentrates (or compresses) the target signal returns in short time intervals. Cross-correlation, which may be equivalent to a so-called matched filter, can be replaced, in some alternative implementations, by other range compression filters, such as reciprocal or convolutional filters. In some implementations, the cross-correlation can be also efficiently performed in the frequency domain.

The expression of the cross-ambiguity function is:

$$\chi(\tau, f_D) = \int_{-\infty}^{+\infty} s_{surv}(t) \cdot s_{ref}^*(t - \tau) \cdot e^{-j2\pi f_D t} dt \quad (1)$$

where $s_{surv}$ is a complex signal received by the surveillance channel 130-2 and $s_{ref}$ the reference signal, * denotes the complex conjugate, $\tau$ is the Time Difference of Arrival (TDOA), $f_D$ the potential Doppler shift. The temporal integration may be limited by the coherent time interval. The ambiguity function (1) corresponds to the response of a matched filter shifted in Doppler. In some implementations, digital data may be used, so the ambiguity function may be sampled over $N$ samples, yielding

$$\chi(n, f_D) = \sum_{n=0}^{N-1} s_{surv}[nT_s] \cdot s_{ref}^*[nT_s - \tau] \cdot e^{-j2\pi f_D n T_s / N} \quad (2)$$

The receiver including antennas 130-1, 130-2 is stationary and the transmitter 110 is also assumed stationary during the CPI. Hence, the range-Doppler map resulting from the processing in Fig. 2 would yield zero Doppler responses for stationary targets 120, whereas non-zero responses for a moving target 120. Moving targets, such as avalanches, can then be easily detected in the range-Doppler map as echoes that are removed from the zero-Doppler. Detection can be carried out by simple two-dimensional CA-CFAR, with a detection threshold set to guarantee given performance in terms of probability of detection and probability of false alarm, for a given target model. Constant false alarm rate (CFAR) detection refers to an adaptive algorithm used in radar systems to detect target returns against a background of noise, clutter and interference. In simple CFAR detection schemes, the threshold level may be calculated by estimating the level of the noise floor around the bin or cell under test (CUT). This can be found by taking a block of bins/cells around the CUT and calculating the average power level. To avoid corrupting this estimate with power from the CUT itself, cells immediately adjacent to the CUT may be ignored (and referred to as "guard cells"). A target may be declared present in the CUT if it is both greater than all its adjacent cells and greater than the local average power level. The estimate of the local power level may sometimes be increased slightly to allow for the limited sample size. This approach is called a cell-averaging CFAR (CA-CFAR).

If digital signals are broadcast by transmitter 110, it may also be possible to operate the passive radar system 100 with only a single receive channel, requiring only a single receive antenna to be pointed towards the target geographic area 120. In this case, clean replica of the transmitted signal for the cross-correlation in (2) may be be retrieved by demodulating and re-modulating the digital signal. This approach may work as long as the direct signal is received with an adequate signal to noise ratio from the antenna pointing towards the geographic area 120. This might however not be the case for all satellite IOs, due to limited signal power density at the earth surface. The advantages of using passive radar instead of active radars are the following:

- no need for any transmitting licenses as they are using illuminators of opportunities. Obtaining authorizations for transmitting can be complicated and even impossible in some protected areas. Therefore, using a passive solution may offer a significant benefit solving this issue.
- less expensive than active radars as they require less hardware, and no need to have a transmitter with high power. It could allow more sites to be equipped with this technology and therefore increasing the safety of alpine sites.

A proof of concept experiment has been carried out with the satellite based passive radar system SABBIA developed by Fraunhofer FHR, see I. Pisciottano, D. Cristallini, J. Schell and V. Seidel, "Passive ISAR for Maritime Target Imaging: Experimental Results," 2018 19th International Radar Symposium (IRS), Bonn, 2018, pp. 1-10 and D. Cristallini, I. Pisciottano and H. Kuschel, "Multi-Band Passive Radar Imaging Using Satellite Illumination," 2018 International Conference on Radar (RADAR), Brisbane, QLD, 2018, pp. 1-6.

Not having the possibility of conducting an experiment with a controlled avalanche, a small controlled landslide was considered instead. The passive radar system has been deployed as in Fig. 1, namely with one reference antenna 130-1 pointing at the satellite IO (Astra 19.2E has been considered for this case), and the surveillance antenna 130-2 pointing at the controlled landslide. The aim of this experiment was to investigate whether the passive radar system could detect the movement of these rocks. Data has been recorded from the two receive channels, down-converted to base band and processed according to (2) and to the processing sketched in Fig. 2.

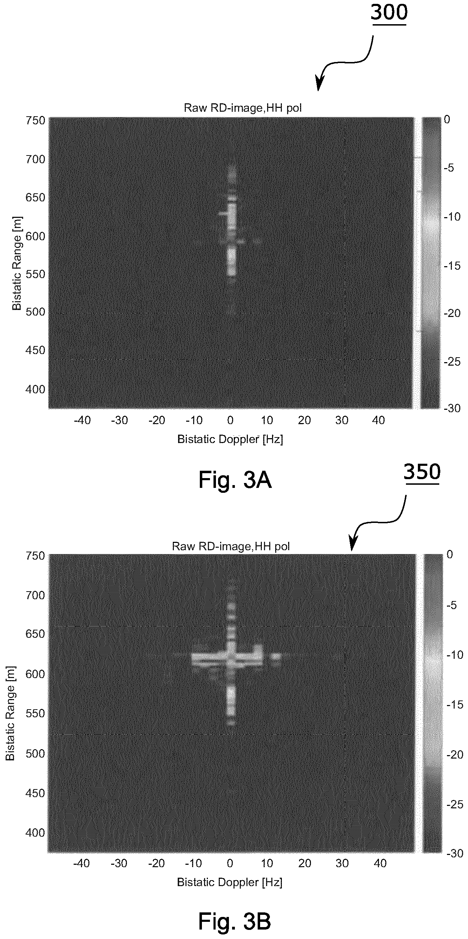

**Fig. 3A** shows a range-Doppler map 300 obtained few seconds before the landslide occurred. It can be clearly seen that the returns are occurring at zero-Doppler only, meaning that there is no movement detected by the system. On the other hand, **Fig. 3B** shows a Range Doppler map 350 obtained during the landslide. The landslide is clearly detected, namely there is a non-zero Doppler shift due to the movement of the rocks along the slope.

To summarize, the present disclosure relates to a passive radar exploiting satellite-based illuminators of opportunity for avalanche and landslide detection, specifically, for confirmation of occurred avalanches after triggering blasting. The passive radar exploiting satellite based illuminators of opportunity may be defined as an electronic system comprising the following hardware and software sub-systems:

- a radio frequency (RF) heterodyne or super-heterodyne receiver with $N \geq 1$ receiving channels, able to receive and digitize baseband in-phase and quadrature components of satellite signals of opportunity;
- in case of $N > 1$ receiving channels, down-conversion at all receiving channels may be performed coherently, e.g., with a single generating local oscillator controlling all mixers;
- in case of $N = 1$ receiving channel, a software module to demodulate and remodulate the digital direct signal, so as to provide a clean replica of the transmitter signal.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component.

Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processorexecutable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

**Claims**

1.  A passive radar avalanche warning method, comprising

    illuminating an area (120) of a potential avalanche with at least one third-party satellite-based transmitter (110), wherein the satellite-based transmitter (110) comprises a geostationary satellite configured to broadcast a digital television signal;
    obtaining a first signal (115-1) corresponding to a direct arrival of the digital television signal from the third-party satellite-based transmitter (110) and a second signal (115-2) corresponding to a reflection of the digital television signal from the area (120) of the potential avalanche;
    determining a Doppler shift between the first and the second signal (115-1; 115-2); and
    indicating an avalanche if the Doppler shift exceeds a predetermined threshold.

2.  The method of claim 1, wherein determining the Doppler shift comprises determining a range-Doppler map based on comparing the first and the second signal (115-1; 115-2).

3.  The method of claim 2, wherein comparing the first and the second signal (115-1; 115-2) comprises cross-correlating the first and the second signal.

4.  The method of any one of the previous claims, wherein a first directive antenna (130-1) pointing towards the third-party satellite-based transmitter (110) is used for receiving the first signal (115-1) and a second directive antenna (130-2) pointing towards the area (120) of the potential avalanche is used for receiving the second signal (115-2).

5.  The method of any one of the previous claims, wherein a directive antenna pointing towards the area (120) of the potential avalanche is used for receiving the second signal (115-2) and wherein the first signal (115-1) is obtained from the second signal by demodulating and re-modulating a digital signal contained in the second signal.

6.  The method of any one of the previous claims, further comprising

    purposely triggering the avalanche, and
    confirming the avalanche if the Doppler shift exceeds the predetermined threshold.

7.  A computer program comprising instructions which, when the computer program is executed on the passive radar avalanche warning system of claim 8, cause the passive radar avalanche warning system to carry out the passive radar avalanche warning method of claim 1.

8. A passive radar avalanche warning system (100), comprising

   at least one third-party satellite-based transmitter (110) for illuminating an area (120) of a potential avalanche, wherein the satellite-based transmitter (110) comprises a geostationary satellite configured to broadcast a digital television signal;
   at least one receiver (130) configured to obtain a first signal corresponding to a direct arrival of the digital television signal from the third-party satellite-based transmitter and a second signal corresponding to a reflection of the digital television signal from the area of the potential avalanche;
   a processor (140) configured to

   determine a Doppler shift between the first and the second signal; and
   indicate an avalanche if the Doppler shift exceeds a predetermined threshold.

**Patentansprüche**

1. Ein Passive-Radar-Lawinenwarnungs-Verfahren, umfassend

   Beleuchten eines Bereichs (120) einer potenziellen Lawine mit mindestens einem satellitenbasierten Drittsender (110), wobei der satellitenbasierte Sender (110) einen geostationären Satelliten umfasst, der ausgebildet ist, ein digitales Fernsehsignal rundzusenden;
   Erhalten eines ersten Signals (115-1), das einer direkten Ankunft des digitalen Fernsehsignal s von dem satellitenbasierten Drittsender (110) entspricht, und eines zweiten Signals (115-2), das einer Reflexion des digitalen Fernsehsignals von dem Bereich (120) der potenziellen Lawine entspricht;
   Bestimmen einer Doppler-Verschiebung zwischen dem ersten und dem zweiten Signal (115-1; 115-2); und
   Anzeigen einer Lawine, wenn die Dopplerverschiebung einen vorbestimmten Schwellenwert überschreitet.

2. Das Verfahren gemäß Anspruch 1, wobei das Bestimmen der Dopplerverschiebung ein Bestimmen einer Entfernungs-/Doppler-Karte basierend auf einem Vergleichen des ersten und des zweiten Signals (115-1; 115-2) umfasst .

3. Das Verfahren gemäß Anspruch 2, wobei das Vergleichen des ersten und des zweiten Signals (115-1; 115-2) ein Kreuzkorrelieren des ersten und des zweiten Signals umfasst.

4. Das Verfahren gemäß einem der vorherigen Ansprüche, wobei eine erste Richtantenne (130-1), die in Richtung des satellitenbasierten Drittsender (110) zeigt, zum Empfangen des ersten Signals (115-1) verwendet wird, und eine zweite Richtantenne (130-2), die in Richtung des Bereichs (120) der potenziellen Lawine zeigt, zum Empfangen des zweiten Signals (115-2) verwendet wird.

5. Das Verfahren gemäß einem der vorherigen Ansprüche, wobei eine Richtantenne, die in Richtung des Bereichs (120) der potenziellen Lawine zeigt, zum Empfangen des zweiten Signals (115-2) verwendet wird, und wobei das erste Signal (115-1) aus dem zweiten Signal durch Demodulieren und Remodulieren eines in dem zweiten Signal enthaltenen digitalen Signals erhalten wird.

6. Das Verfahren gemäß einem der vorherigen Ansprüche, ferner umfassend

   ein absichtliches Triggern der Lawine, und
   Bestätigen der Lawine, wenn die Dopplerverschiebung den vorbestimmten Schwellenwert überschreitet.

7. Ein Computerprogramm mit Anweisungen, die, wenn das Computerprogramm auf dem Passive-Radar-Lawinenwarnungs-System gemäß Anspruch 8 ausgeführt wird, das Passive-Radar-Lawinenwarnungs-System veranlassen, das Passive-Radar-Lawinenwarnungs-Verfahren gemäß Anspruch 1 durchzuführen.

8. Ein Passive-Radar-Lawinenwarnungs-System (100), umfassend

   mindestens einen satellitenbasierten Drittsender (110) zum Beleuchten eines Bereichs (120) einer potenziellen Lawine, wobei der satellitenbasierte Sender (110) einen geostationären Satelliten umfasst, der ausgebildet ist, ein digitales Fernsehsignal rundzusenden;
   mindestens einen Empfänger (130), der ausgebildet ist, ein erstes Signal, das einer direkten Ankunft des digitalen Fernsehsignals von dem satellitenbasierten Drittsender entspricht, und ein zweites Signal, das einer Reflexion des digitalen Fernsehsignals von dem Bereich der potenziellen Lawine entspricht, zu erhalten; einen Prozessor (140), der ausgebildet ist,

eine Dopplerverschiebung zwischen dem ersten und dem zweiten Signal zu bestimmen; und
eine Lawine anzuzeigen, wenn die Dopplerverschiebung einen vorbestimmten Schwellenwert überschreitet.

**Revendications**

1. Procédé d'avertissement d'avalanche par radar passif, comprenant le fait de

éclairer une zone (120) d'avalanche potentielle avec au moins un émetteur satellite tiers (110), dans lequel l'émetteur satellite (110) comprend un satellite géostationnaire configuré pour diffuser un signal de télévision numérique ;
obtenir un premier signal (115-1) correspondant à une arrivée directe du signal de télévision numérique à partir de l'émetteur satellite tiers (110) et un deuxième signal (115-2) correspondant à une réflexion du signal de télévision numérique à partir de la zone (120) de l'avalanche potentielle ;
déterminer un décalage Doppler entre le premier et le deuxième signal (115-1 ; 115-2) ; et
indiquer une avalanche si le décalage Doppler dépasse un seuil prédéterminé.

2. Procédé selon la revendication 1, dans lequel le fait de déterminer une carte distance/Doppler comprend le fait de déterminer une carte distance/Doppler basée sur le fait de comparer le premier et le deuxième signal (115-1 ; 115-2).

3. Procédé selon la revendication 2, dans lequel le fait de comparer le premier et le deuxième signal (115-1 ; 115-2) comprend une corrélation croisée du premier et du deuxième signal.

4. Procédé selon l'une des revendications précédentes, dans lequel une première antenne directive (130-1) pointant vers l'émetteur satellite tiers (110) est utilisée pour recevoir le premier signal (115-1) et une deuxième antenne directive (130-2) pointant vers la zone (120) de l'avalanche potentielle est utilisée pour recevoir le deuxième signal (115-2).

5. Procédé selon l'une des revendications précédentes, dans lequel une antenne directive pointant vers la zone (120) de l'avalanche potentielle est utilisée pour recevoir le deuxième signal (115-2) et dans lequel le premier signal (115-1) est obtenu à partir du deuxième signal par démodulation et re-modulation d'un signal numérique contenu dans le deuxième signal.

6. Procédé selon l'une des revendications précédentes, comprenant en outre le fait de

déclencher volontairement l' avalanche, et
confirmer l'avalanche si le décalage Doppler dépasse un seuil prédéterminé.

7. Programme d'ordinateur comprenant des instructions qui, lorsque le programme d'ordinateur est exécuté sur le système d'avertissement d'avalanche par radar passif selon la revendication 8, amènent le système d'avertissement d'avalanche par radar passif à exécuter le procédé d'avertissement d'avalanche par radar passif selon la revendication 1.

8. Système d'avertissement d'avalanche par radar passif (100), comprenant

au moins un émetteur satellite tiers (110) pour éclairer une zone (120) d'avalanche potentielle, l'émetteur satellite (110) comprenant un satellite géostationnaire configuré pour diffuser un signal de télévision numérique;
au moins un récepteur (130) configuré pour obtenir un premier signal correspondant à l'arrivée directe du signal de télévision numérique à partir de l'émetteur satellite tiers et un deuxième signal correspondant à une réflexion du signal de télévision numérique à partir de la zone de l'avalanche potentielle ;
un processeur (140) configuré pour

déterminer un décalage Doppler entre le premier et le deuxième signal ; et

indiquer une avalanche si le décalage Doppler dépasse un seuil prédéterminé.

Fig. 1

200

210-1

210-2

| reference antenna | surveillance antenna |

220

range compression

230

target detection

Fig. 2

Raw RD-image,HH pol

Fig. 3A

Raw RD-image,HH pol

Fig. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4300121 A

- CN 104569968 A

**Non-patent literature cited in the description**

- **A. KOGELNIG** ; **S.WYSSEN** ; **E. MARCHETTI** ; **G. ULIVIERI**. Avalanche detection systems for operational use: Summary of three years experiences. *Proceedings, International Snow Science Workshop*, 2014
- **R. KOSCHUCH**. *Avalanche radar introduction*, 2015
- **L. MEIER** ; **M. JACQUEMART** ; **B. BLATTMANN** ; **B. ARNOLD**. Real-time avalanche detection with long-range, wide-angle radars for road safety in Zermatt, Switzerland. *Proceedings, International Snow Science Workshop*, 2016
- **D. PASTINA et al.** Maritime Moving Target Long Time Integration for GNSS-Based Passive Bistatic Radar. *IEEE Transactions on Aerospace and Electronic Systems*, December 2018, vol. 54 (6), 3060-3083

- **D. CRISTALLINI et al.** Spacebased passive radar enabled by the new generation of geostationary broadcast satellites. *2010 IEEE Aerospace Conference*, 2010, 1-11
- **I. PISCIOTTANO** ; **D. CRISTALLINI** ; **J. SCHELL** ; **V. SEIDEL**. Passive ISAR for Maritime Target Imaging: Experimental Results. *2018 19th International Radar Symposium (IRS)*, 2018, 1-10
- **D. CRISTALLINI** ; **I. PISCIOTTANO** ; **H. KUSCHEL**. Multi-Band Passive Radar Imaging Using Satellite Illumination. *2018 International Conference on Radar (RADAR)*, 2018, 1-6